# EUROPÄISCHE PATENTSCHRIFT

(11) **EP 4 517 114 B1**
(45) Veröffentlichungstag und Bekanntmachung des Hinweises auf die Patenterteilung: **22.07.2026**
(21) Anmeldenummer: 24196533.4
(22) Anmeldetag: 26.08.2024
(51) Int. Cl.: F16B 13/14

(54) **ANKERHÜLSE, ANORDNUNG UND VERFAHREN ZUM BEFESTIGEN**
ANCHOR SLEEVE, ARRANGEMENT AND METHOD FOR FASTENING
DOUILLE D'ANCRAGE, ENSEMBLE ET PROCÉDÉ DE FIXATION

(30) Priorität: 01.09.2023 DE 102023123591
(43) Veröffentlichungstag der Anmeldung: 05.03.2025
(73) Patentinhaber: Adolf Würth GmbH & Co. KG, 74653 Künzelsau (DE); Würth International AG, 7000 Chur (CH)
(72) Erfinder: SPIRK, Christian, 74653 Künzelsau (DE)
(74) Vertreter: Patentanwälte Ruff, Wilhelm, Beier, Dauster & Partner mbB

(56) Entgegenhaltungen:
- EP-A1- 0 833 065
- WO-A1-2008/155617
- DE-A1- 3 225 051
- DE-A1- 3 312 952

## Beschreibung

Die Erfindung betrifft eine Ankerhülse für ein Injektionssystem zum Befestigen eines Ankerelements in einer Öffnung in einem Gegenstand, insbesondere in einem Bohrloch in einem Mauerwerk. Die Erfindung betrifft auch eine Anordnung mit einem Ankerelement und einer erfindungsgemäßen Ankerhülse. Die Erfindung betrifft auch ein Verfahren zum Befestigen eines Ankerelements in einer Öffnung eines Gegenstands mittels einer erfindungsgemäßen Ankerhülse.

Ankerhülsen für Injektionssysteme zum Befestigen eines Ankerelements in einem Bohrloch sind bekannt, siehe z. B. die Würth-Siebhülse SH16x85, Art. Nr. 090344164. Die auch als Siebhülse bezeichnete Ankerhülse ist auf ihrem Umfang zumindest abschnittsweise mit einem Sieb versehen. Die Ankerhülse wird in ein Bohrloch eingeschoben und dann mit einem Injektionsmörtel gefüllt. Danach wird ein Ankerelement, üblicherweise eine Ankerstange, in die Ankerhülse eingeschoben und dabei wird überschüssiger Injektionsmörtel auf die Außenfläche der Siebhülse verdrängt. Der Injektionsmörtel passiert dadurch das Sieb der Ankerhülse und gelangt auf die Außenseite der Ankerhülse. Eine Lasteinleitung in das Mauerwerk wird im Wesentlichen durch den Formschluss, die sogenannte Plombenbildung, zwischen der Ankerstange, der Ankerhülse und dem ausgehärteten Injektionsmörtel sowie dem Hohlraum des Verankerungsgrunds sichergestellt. Im Allgemeinen wird die höchste Tragfähigkeit bei einer kompakten Plombenbildung erwartet. Das bedeutet, dass der durch die Ankerhülse gedrückte Injektionsmörtel auf der Außenseite der Ankerhülse wieder zusammenläuft. Um dies zu erreichen, muss die Konsistenz des Injektionsmörtels auf die Größe der Öffnungen und Stegbreiten zwischen den Öffnungen der Ankerhülse abgestimmt sein, damit es nicht zu einer sogenannten Spaghetti-Bildung des Mörtels kommt. In einem solchen Fall können nämlich die einzelnen Mörtelfäden oder Spaghetti bei Belastung leicht abgeschert werden. Dies wird als sogenannter Reißverschlusseffekt bezeichnet, der zu einer geringeren Tragfähigkeit führt. Eine Standardsiebhülse aus Kunststoff mit einer Gesamtlänge von L=85 mm und einem Außennenndurchmesser von d=16 mm wird üblicherweise in Kombination mit Ankerstangen der Größe M8 und M10 verwendet. Solche Ankerstangen sind im Wesentlichen gewöhnliche Gewindestangen. Eine Ankerstange der Größe M12 kann theoretisch in derselben Siebhülse verwendet werden, jedoch wird hierbei teilweise ein unzureichender Verbund zwischen Ankerstange und Siebhülse beobachtet. Im Besonderen gilt dies für den oberen Bereich am Bohransatz. Im Allgemeinen lässt sich diese Beobachtung auf den sehr kleinen Ringspalt bzw. die nach dem Einschieben der Ankerstange geringe verbleibende Mörtelmenge zwischen Ankerstange und Siebhülse zurückführen. Der verbliebene Mörtel setzt sich in den Gewindeflanken der Ankerstange ab und aufgrund der Kohäsion des Mörtels bzw. der kleinen Öffnungen der Siebhülse kann fehlender Mörtel nicht mehr von der Außenseite zurück in die Siebhülse sickern. Durch die unterschiedlich großen Durchmesser bzw. Volumina der Ankerstangen wird beim Einschieben unterschiedlich viel Mörtel nach außen verdrängt, also in radialer Richtung durch die Siebhülse hindurch. Bei gleicher injizierter Mörtelmenge entstehen dadurch unterschiedlich große bzw. ausgeprägte Formschlüsse.

Aus der deutschen Offenlegungsschrift DE 32 25 051 A1 ist eine Ankerhülse für ein Injektionssystem zum Befestigen eines Ankerelements in einer Öffnung in einem Bohrloch in einem Mauerwerk bekannt. Die Ankerhülse weist ein Innenteil aus gelochtem Kunststoff und ein Außenteil aus flexiblem, nicht-durchlässigem Material auf. Durch Einbringen einer aushärtbaren Masse in das Innenteil wird die flexible Ummantelung radial nach außen gedrückt und kann sich dadurch im Mauerwerk, beispielsweise in einem Hohllochziegel, verankern.

Aus der internationalen Offenlegungsschrift WO 2008/155617 A1 ist eine Ankerhülse für ein Injektionssystem zum Befestigen eines Ankerelements in einer Öffnung in einem Gegenstand bekannt. Die Ankerhülse besteht wenigstens abschnittsweise aus flexiblem, durchlässigem Schaumstoff, wobei die Ankerhülse ein rohrartiges Element aus dem Schaumstoff aufweist. Es ist ein Träger mit einem Endstück und einem Eingangsflansch vorgesehen, wobei der Schaumstoff an dem Träger befestigt ist. Das Endstück und der Eingangsflansch sind mittels wenigstens einer Verbindungsleiste verbunden. Nach dem Einbringen einer aushärtbaren Masse in die Ankerhülse wird die aushärtbare Masse nach außen gedrückt und gelangt in den Schaumstoff. Bei Verankerung der Ankerhülse in einem Hohllochziegel wird der Schaumstoff zwischen die einzelnen Rippen des Hohllochziegels gedrückt. Sobald die aushärtbare Masse ausgehärtet ist, ist die Ankerhülse dann in dem Hohllochziegel verankert.

Weitere Ankerhülsen für Injektionssysteme sind aus der deutschen Offenlegungsschrift DE 33 12 952 A1 und aus der europäischen Offenlegungsschrift EP 0 833 065 A1 bekannt.

Mit der Erfindung sollen eine Ankerhülse für ein Injektionssystem, eine Anordnung mit einem Ankerelement und einer Ankerhülse sowie ein Verfahren zum Befestigen eines Ankerelements in einer Öffnung eines Gegenstands mittels einer Ankerhülse verbessert werden.

Erfindungsgemäß ist hierzu eine Ankerhülse für ein Injektionssystem mit den Merkmalen von Anspruch 1, eine Anordnung mit den Merkmalen von Anspruch 9, eine Anordnung mit den Merkmalen von Anspruch 10 sowie ein Verfahren mit den Merkmalen von Anspruch 13 vorgesehen. Vorteilhafte Weiterbildungen der Erfindung ergeben sich aus den Unteransprüchen.

Eine Ankerhülse für ein Injektionssystem zum Befestigen eines Ankerelements in einer Öffnung in einem Gegenstand, insbesondere in einem Bohrloch in einem Mauerwerk, ist erfindungsgemäß so ausgestaltet, dass die Ankerhülse wenigstens abschnittsweise aus flexiblem, durchlässigem Schaumstoff mit offener Porenstruktur besteht.

Überraschenderweise bietet die Verwendung von flexiblem durchlässigem Schaumstoff mit offener Porenstruktur in einer Ankerhülse erhebliche Vorteile beim Befestigen eines Ankerelements mittels einer Ankerhülse und Injektionsmörtel. Die Verwendung von flexiblem Schaumstoff erlaubt das Einbringen von Übergrößen von Ankerhülsen in eine Öffnung bzw. ein Bohrloch von Hohlsteinen. Das flexible, elastische beziehungsweise rückfedernde Material, also der Schaumstoff, kann durch eine Öffnung mit kleinerem Durchmesser hindurchgedrückt werden und passt sich durch Expansion aufgrund des sogenannten Erinnerungsvermögens oder aufgrund von Rückfederung der Kontur des Verankerungsgrunds an. Dadurch kann die Ankerhülse selbst bzw. der Schaumstoff selbst auch Teil des Formschlusses der Verankerung werden. Beispielsweise wird eine Bohrung in einem Hohlstein ausgeführt. Eine Ankerhülse, deren Schaumstoffelement einen größeren Durchmesser als das Bohrloch aufweist, kann dadurch, dass sich der Schaumstoff zusammendrücken lässt, durch die Öffnung gedrückt werden und der Schaumstoff expandiert hinter der Öffnung wieder. Konventionelle Siebhülsen können dies nicht leisten, so dass bei konventionellen Hülsen der zylindrische Mantel der Kunststoffspritzgussteile eine Scherfläche bildet. Bei konventionellen Siebhülsen muss der Formschluss durch die Menge des austretenden Mörtels sichergestellt werden. Bei der erfindungsgemäßen Ankerhülse ist somit die Ausbildung eines deutlichen Formschlusses wesentlich erleichtert, so dass die Systemsicherheit und Tragfähigkeit erhöht werden.

Die Struktur des Schaumstoffs ist mit den Wirr-Lagen eines Vliesstoffs vergleichbar. Dadurch entsteht eine Durchlässigkeit, die keiner geradlinigen Kanalöffnung von symmetrisch angeordneten Öffnungen oder Löchern und Stegen folgt. Die Bildung von Mörtelfäden und damit der sogenannte Spaghettieffekt ist dadurch auf ein Minimum reduziert. Vielmehr wird eine lufteinschlussfreie bzw. eine homogene und kompakte Plombenbildung des Injektionsmörtels gefördert. Aufgrund der unterdrückten Spaghettibildung und der großen Oberfläche des Schaumstoffs wird das Haftvermögen des Injektionsmörtels bzw. der Ankerhülse erhöht und es können Injektionsmörtelsysteme mit unterschiedlichen Viskositäten bzw. Zusammensetzungen, insbesondere mit unterschiedlichem Füllgrad, angewendet werden. Eine eventuell beobachtete Spaghettibildung auf der Schaumstoffoberfläche beeinflusst die Tragfähigkeit der Mörtelplombe nur geringfügig, da hauptsächlich der verfüllte bzw. der mit Mörtel getränkte Schaumstoff als Formschluss wirkt.

Die große Oberfläche des Schaumstoffs erhöht die Haftung bzw. Adhäsion des Injektionsmörtels auf und in dem Schaumstoff und reduziert ein Abtropfen des Mörtels von der Schaumstoffhülse, beispielsweise in Kammern eines Hohlsteins.

Aufgrund des flexiblen Schaumstoffs kann ein Innendurchmesser der Ankerhülse unterschiedlich große Ankerstangendurchmesser aufnehmen und zentrisch im Bohrloch halten. Dies deshalb, da der Schaumstoff selbstverständlich auch auf der Innenseite der Ankerhülse nachgibt und einer Ankerstange ausweicht. Bei einer erfindungsgemäßen Ankerhülse mit einem Nenndurchmesser von d=16 mm kann dadurch der Anwendungsbereich verwendbarer Ankerstangen um den Ankerstangendurchmesser M12 erweitert werden, damit infolgedessen Ankerstangen M8, M10 und M12 verwendet werden können. Dies deshalb, da kein Ringspalt zwischen Ankerstange und dem Schaumstoff der Ankerhülse besteht. Der Innendurchmesser der Ankerhülse ist stets kleiner oder gleich dem Ankerstangendurchmesser und aufgrund des flexiblen bzw. stauchfähigen Schaumstoffs steht die Ankerstangenoberfläche stets in Kontakt mit dem mit Mörtel getränkten Schaumstoff. Dies gilt auch dann, wenn die Ankerstange nach dem Einbringen in die Ankerhülse im noch nicht ausgehärteten und mit Injektionsmörtel getränkten Schaumstoff bewegt wird. Dadurch wird die Anwendungssicherheit erheblich erhöht.

Als Schaumstoff kann beispielsweise ein offenzelliger Filterschaumstoff auf Basis von Polypropylen (PP), Polyamid (PA), Polyethylen (PET) oder Ähnlichem eingesetzt werden. Ein solcher Filterschaumstoff findet beispielsweise als Wasserfilter in der Aquaristik Verwendung und weist unregelmäßig verteilte unterschiedlich große Poren auf.

In Weiterbildung der Erfindung weist die Ankerhülse ein rohrartiges Element aus dem Schaumstoff auf.

Auf diese Weise kann sichergestellt werden, dass ein Halteabschnitt des Ankerelements vollständig von dem Schaumstoff umgeben ist, so dass ein sehr guter Formschluss zwischen Ankerelement und Schaumstoff erreicht werden kann. Das rohrartige Element kann zwei offene Enden haben.

In Weiterbildung der Erfindung bildet das rohrartige Element aus Schaumstoff ein Sackloch aus.

Auf diese Weise kann das Befüllen der Ankerhülse mit Injektionsmörtel in sehr einfacher Weise erfolgen, da mittels eines Sacklochs sichergestellt werden kann, dass auch das im Bohrloch befindliche Ende des rohrartigen Elements keinen geringeren Ausflusswiderstand bietet als die Umfangswand des rohrartigen Elements. Auch die Befestigung des rohrartigen Elements aus dem Schaumstoff an einem Träger wird dadurch erleichtert.

In Weiterbildung der Erfindung beträgt eine Anzahl der Poren in dem Schaumstoff zwischen 15 PPI (pores per inch) und 25 PPI, insbesondere 20 PPI.

Eine solche Anzahl der Poren in dem offenzelligen Schaumstoff hat sich als äußerst vorteilhaft für die Verwendung in einer Ankerhülse für ein Injektionssystem herausgestellt.

Gemäß der Erfindung ist ein Träger mit einem Endstück und einem Eingangsflansch vorgesehen, wobei der Schaumstoff an dem Träger befestigt ist.

Ein Träger mit einem Endstück und einem Eingangsflansch erlaubt eine sichere Befestigung des flexiblen Schaumstoffs und stellt sicher, dass die Ankerhülse ohne Beschädigung in eine Öffnung eingeführt werden kann.

Gemäß der Erfindung sind das Endstück und der Eingangsflansch mittels wenigstens einer Verbindungsleiste verbunden.

Eine solche Verbindungsleiste stabilisiert die Ankerhülse, insbesondere wird ein rohrartiges Element aus dem Schaumstoff stabilisiert.

Gemäß der Erfindung ist die wenigstens eine Verbindungsleiste mit Verankerungselementen, insbesondere Sägezähne und/oder Haken, zum Angreifen an dem Schaumstoff versehen.

Auf diese Weise kann sichergestellt werden, dass sich beim Einschieben der Ankerhülse in eine Öffnung der Schaumstoff nicht übermäßig relativ zum Träger verschiebt, sondern der Schaumstoff bis in die vorgesehene Tiefe in der Öffnung eingeschoben werden kann. Verankerungselemente an der Verbindungsleiste stellen dabei eine zuverlässige Funktion der Ankerhülse sicher, ohne eine zusätzliche Verklebung oder sonstige Verbindung zwischen Schaumstoff und Träger zu erfordern.

In Weiterbildung der Erfindung erstrecken sich die Sägezähne und/oder Haken von der Verbindungsleiste weg in Umfangsrichtung des rohrartigen Elements aus Schaumstoff.

Es hat sich herausgestellt, dass eine solche Anordnung der Sägezähne und/oder Haken einen sicheren Halt des Schaumstoffs am Träger beim Einschieben der Ankerhülse in eine Öffnung sicherstellt.

In Weiterbildung der Erfindung sind die Sägezähne teilweise in einer Richtung zum Endstück und teilweise in einer Richtung vom Endstück weg ausgerichtet.

Auf diese Weise kann sichergestellt werden, dass die Ankerhülse gegebenenfalls auch ein Stück weit wieder aus der Öffnung herausgezogen werden kann, ohne dass sich eine Position des Schaumstoffs zum Träger wesentlich ändert, also ohne dass sich der Schaumstoff zusammenschiebt.

In Weiterbildung der Erfindung ist das rohrartige Element aus Schaumstoff mit wenigstens einer in Längsrichtung verlaufenden Nut versehen und die Verbindungsleiste ist in der Nut angeordnet.

Auf diese Weise kann eine sichere Befestigung des Schaumstoffs am Träger gewährleistet werden. Beispielsweise weist das rohrartige Element aus Schaumstoff zwei gegenüberliegende Nuten auf und jeweils eine Verbindungsleiste des Trägers ist in jeweils einer Nut angeordnet.

In Weiterbildung der Erfindung erstreckt sich die Nut von einer Außenseite des rohrartigen Elements nach innen.

Auf diese Weise sind eine sichere Befestigung und eine einfache Montage des Trägers und des rohrartigen Elements aus Schaumstoff möglich.

In Weiterbildung der Erfindung ist ein Träger mit einem Endstück und einem Eingangsflansch vorgesehen, wobei der Schaumstoff an dem Endstück und/oder mit dem Eingangsflansch verbunden ist, insbesondere an dem Endstück und an dem Eingangsflansch festgeklemmt ist.

Der flexible Schaumstoff ist durch die Verbindung mit dem Endstück und/oder dem Eingangsflansch sicher befestigt, so dass die erfindungsgemäße Ankerhülse in eine Öffnung eingeschoben werden kann, ohne dass zu befürchten ist, dass sich der Schaumstoff relativ zum Träger verschiebt.

In Weiterbildung der Erfindung ist das Endstück mit einer Durchgangsöffnung versehen und der Schaumstoff ist mittels eines Klemmniets, der in die Durchgangsöffnung eingeschoben ist, an dem Endstück festgeklemmt.

Auf diese Weise lässt sich eine zuverlässige Verbindung zwischen Schaumstoff und Träger erzielen. Der Klemmniet kann dann, wenn der Schaumstoff in Form eines rohrartigen Elements mit einem Sackloch vorliegt, durch den Schaum hindurchgedrückt werden, um dadurch eine besonders sichere Befestigung zu erzielen. Der Schaumstoff kann, beispielsweise bei einem rohrartigen Element mit zwei offenen Enden, durch den Klemmniet auch radial nach außen gedrückt und dadurch am Endstück festgeklemmt und insbesondere auch abgedichtet werden.

In Weiterbildung der Erfindung ist die wenigstens eine Verbindungsleiste an ihrem, dem Endstück gegenüberliegenden Ende mit einer Halteschale versehen und der Eingangsflansch ist mittels einer Eingangsbuchse gebildet, wobei der Schaumstoff zwischen der Halteschale und der Eingangsbuchse festgeklemmt ist.

Auch auf diese Weise lässt sich der Schaumstoff sehr zuverlässig an dem Träger sichern, da der Schaumstoff über die gesamte Fläche der Halteschale gegen die Eingangsbuchse geklemmt werden kann. Beispielsweise weist der Träger zwei Verbindungsleisten und damit zwei Halteschalen auf, die beide gegen die Eingangsbuchse gedrückt werden und dabei den Schaumstoff zwischen einer jeweiligen Halteschale und der Eingangsbuchse festklemmen.

In Weiterbildung der Erfindung ist das Endstück auf seiner, dem Eingangsflansch zugewandten Seite mit einem kegelstumpfförmigen Führungsabschnitt versehen, der sich in Richtung von dem Eingangsflansch weg verjüngt.

Auf diese Weise kann die Ankerhülse beim Einschieben in eine Öffnung geführt werden, so dass das Einschieben erleichtert ist. Die dem Eingangsflansch zugewandte Seite kann als Führung für das Endstück einer Injektionsmörtelspritze und auch als Führung für ein Ankerelement dienen, um das Ankerelement zentrisch zur Ankerhülse auszurichten.

Bei einer Anordnung mit einem Ankerelement und einer erfindungsgemäßen Ankerhülse weist die Ankerhülse ein rohrartiges Element aus dem Schaumstoff auf und das Ankerelement weist einen Verankerungsabschnitt auf, der zum Einschieben in das rohrartige Element ausgebildet ist, wobei ein Innendurchmesser des rohrartigen Elements wenigstens abschnittsweise kleiner oder gleich dem Außendurchmesser des Ankerelements im Verankerungsabschnitt ist.

Auf diese Weise ist sichergestellt, dass ein Außenumfang des Ankerelements im Verankerungsabschnitt an der Innenseite des rohrartigen Elements aus Schaumstoff anliegt. Dadurch kann eine besonders sichere Verbindung zwischen der Ankerhülse und dem Ankerelement im Verankerungsabschnitt erzielt werden. Der kleinere oder gleiche Innendurchmesser des rohrartigen Elements im Vergleich zum Außendurchmesser des Ankerelements sorgt auch für eine zuverlässige Führung und Zentrierung des Ankerelements beim Einführen in das rohrartige Element.

In Weiterbildung der Erfindung ist ein Außendurchmesser des rohrartigen Elements wenigstens abschnittsweise größer als der Innendurchmesser einer Öffnung, die zum Einführen der Ankerhülse vorgesehen ist.

Auf diese Weise kann sich das rohrartige Element aus Schaumstoff nach dem Einschieben in eine Öffnung, beispielsweise in einem Hohlziegel, in radialer Richtung ausdehnen. Nach dem Füllen des Schaumstoffs mit Injektionsmörtel wird dadurch eine gleichmäßige Plombenbildung und damit ein zuverlässiger Formschluss der Ankerhülse sichergestellt.

In Weiterbildung der Erfindung ist das Ankerelement so weit in die Ankerhülse eingeschoben, dass ein Ende des Ankerelements an einer Innenseite eines Endstücks der Ankerhülse anliegt.

Bei einer weiteren Anordnung mit einer erfindungsgemäßen Ankerhülse weist die Ankerhülse ein rohrartiges Element aus Schaumstoff auf und es sind ein Ankerelement, eine Öffnung in einem Gegenstand, insbesondere ein Bohrloch in einer Gebäudewand, sowie Injektionsmörtel vorgesehen, wobei die Ankerhülse wenigstens abschnittsweise in die Öffnung eingeschoben ist, wobei der Injektionsmörtel die Poren des Schaumstoffs wenigstens teilweise gefüllt hat, wobei das Ankerelement in die Ankerhülse abschnittsweise eingeschoben ist, wobei der Schaumstoff gegenüber einer Ausgangsposition vor dem Einfüllen von Injektionsmörtel in die Ankerhülse und vor dem Einschieben des Ankerelements in die Ankerhülse wenigstens abschnittsweise radial nach außen verdrängt ist und wobei das Ankerelement wenigstens abschnittsweise an einer Innenseite des rohrartigen Elements aus Schaumstoff anliegt, dessen Poren zumindest teilweise mit dem Injektionsmörtel ausgefüllt sind.

Bei einer solchen Anordnung wird ein Formschluss zwischen der Ankerhülse und dem Gegenstand durch den wenigstens abschnittsweise radial nach außen verdrängten Schaumstoff verbessert. Eine Verbindung zwischen dem Ankerelement und der Ankerhülse wird dadurch verbessert, dass das Ankerelement wenigstens abschnittsweise an einer Innenseite des rohrartigen Elements aus dem Schaumstoff anliegt.

In Weiterbildung der Erfindung bildet ein Abschnitt des rohrartigen Elements aus Schaumstoff, dessen Poren wenigstens teilweise mit dem Injektionsmörtel gefüllt sind, unmittelbar hinter einem Eingangssteg des Bohrlochs eine torusförmige Struktur aus, deren Außendurchmesser größer ist als der Innendurchmesser der Öffnung.

Eine solche, sogenannte Donutbildung erlaubt einen zuverlässigen Formschluss zwischen Ankerhülse und Gegenstand und ist bei Verwendung der Ankerhülse in Hohlziegeln oder allgemein mit Hohlräumen hinter einer Eingangswand zu beobachten. Das Ausbilden einer torusförmigen Struktur kann mittels Injizieren des Injektionsmörtels beginnend am offenen Ende oder kurz hinter dem offenen Ende der Ankerhülse begünstigt werden.

In Weiterbildung der Erfindung bildet ein Abschnitt des rohrartigen Elements aus Schaumstoff, dessen Poren wenigstens teilweise mit dem Injektionsmörtel gefüllt sind, zwischen der Öffnung und einer weiteren Öffnung in einem Innensteg des Gegenstands eine zylinderartige oder torusförmige Struktur aus, deren Außendurchmesser größer ist als der Innendurchmesser der Öffnung.

Eine solche zylinderartige Plombenbildung sorgt für einen zuverlässigen Formschluss zwischen Ankerhülse und dem Gegenstand. Eine solche zylindrische Plombenbildung kann durch Einfüllen des Injektionsmörtels in die Ankerhülse beginnend vom Grund der Ankerhülse begünstigt werden.

Bei einem Verfahren zum Befestigen eines Ankerelements in einer Öffnung eines Gegenstands mittels einer erfindungsgemäßen Ankerhülse ist das wenigstens abschnittsweise Einschieben der Ankerhülse in die Öffnung, das Einfüllen von Injektionsmörtel in die Ankerhülse und das abschnittsweise Einschieben des Ankerelements in die Ankerhülse vorgesehen.

In Weiterbildung der Erfindung ist das Aufsetzen der Ankerhülse auf eine Injektionsmörtelspritze, insbesondere bis ein freies Ende der Injektionsmörtelspritze an einem Endstück der Ankerhülse anschlägt, und das Einschieben der Ankerhülse zusammen mit der Injektionsmörtelspritze in die Öffnung vorgesehen.

Auf diese Weise kann die Ankerhülse zuverlässig und ohne Verformung in die Öffnung eingeschoben werden, da sie durch die Injektionsmörtelspritze beim Einschieben stabilisiert wird. Unmittelbar anschließend an das Einschieben kann dann das Einfüllen des Injektionsmörtels in die Ankerhülse beginnend vom Grund der Ankerhülse erfolgen. Das offene Ende der Injektionsmörtelspritze liegt dann nämlich am Grund der Ankerhülse an, so dass ein prozesssicheres Einfüllen des Injektionsmörtels, insbesondere hinsichtlich einer vollständigen Füllung der Ankerhülse mit Injektionsmörtel gewährleistet ist.

Das Einfüllen des Injektionsmörtels in die Ankerhülse kann auch beginnend am offenen Ende oder kurz hinter dem offenen Ende der Ankerhülse erfolgen, insbesondere beginnend in einem ersten Drittel der Länge der Ankerhülse.

Der Schaumstoff verhindert ein rasches Abfließen des Injektionsmörtels aus der Ankerhülse heraus. Auch beim Einfüllen des Injektionsmörtels beginnend am offenen Ende der Ankerhülse wird dadurch zuverlässig erreicht, dass der Injektionsmörtel die Poren des Schaumstoffs wenigstens abschnittsweise füllt. Beispielsweise bildet sich in einem solchen Fall eine torusförmige Struktur unmittelbar hinter einem Eingangssteg der Öffnung, deren Außendurchmesser größer ist als der Innendurchmesser der Öffnung, und dadurch wird ein zuverlässiger Formschluss der Ankerhülse und des Gegenstands erreicht. Prinzipiell kann daher das Einfüllen des Injektionsmörtels an einem beliebigen Punkt auf der Länge des Innenraums der Ankerhülse erfolgen. Ein mittels des Schaumstoffs und des Injektionsmörtels erzielbarer Formschluss kann dadurch an die Geometrie eines Gegenstandes, beispielsweise die Lage der Stege in einem Hohlmauerstein, angepasst werden und die erforderliche Menge an Injektionsmörtel kann verringert werden.

Weitere Merkmale und Vorteile der Erfindung ergeben sich aus den Ansprüchen und der folgenden Beschreibung einer bevorzugten Ausführungsform der Erfindung im Zusammenhang mit den Zeichnungen. In den Zeichnungen zeigen:
- Fig. 1: eine erfindungsgemäße Ankerhülse in einer Ansicht von schräg oben,
- Fig. 2: eine Seitenansicht der Ankerhülse der Fig. 1,
- Fig. 3: eine Ansicht auf die Schnittebene III-III in Fig. 2,
- Fig. 4: eine Seitenansicht eines Trägers der Ankerhülse der Fig. 1,
- Fig. 5: eine weitere Seitenansicht der Ankerhülse der Fig. 1, wobei die Ankerhülse in Fig. 5 gegenüber der Darstellung der Fig. 2 um 90° um die Mittellängsachse gedreht ist,
- Fig. 6: eine weitere Darstellung des Trägers der Ankerhülse der Fig. 4, wobei der Träger gegenüber der Darstellung der Fig. 4 um 90° um die Mittellängsachse gedreht ist,
- Fig. 7: eine Draufsicht auf die Ankerhülse der Fig. 1,
- Fig. 8: eine Ansicht der Ankerhülse der Fig. 1 von unten,
- Fig. 9: den Träger der Fig. 4 in auseinandergezogenem Zustand,
- Fig. 10: den Träger der Fig. 9 in einer gegenüber der Darstellung der Fig. 9 um 90° gedrehten Ansicht,
- Fig. 11: ein rohrartiges Element aus Schaumstoff vor dem Einsetzen in den Träger der Ankerhülse der Fig. 1,
- Fig. 12: eine schematische Darstellung der Kontur des rohrartigen Elements der Fig. 11 zur Verdeutlichung der Geometrie des rohrartigen Elements,
- Fig. 13: eine Seitenansicht des rohrartigen Elements der Fig. 11 und Fig. 12,
- Fig. 14: eine Ansicht auf die Schnittebene XIV-XIV in Fig. 13,
- Fig. 15: eine weitere Seitenansicht des rohrartigen Elements der Fig. 13, wobei das rohrartige Element in Fig. 15 gegenüber der Darstellung der Fig. 13 um 90° um seine Mittellängsachse gedreht ist,
- Fig. 16: eine Ansicht auf die Schnittebene XVI-XVI in Fig. 15,
- Fig. 17: eine Draufsicht auf das rohrartige Element der Fig. 11 und 12 und
- Fig. 18: eine Ansicht des rohrartigen Elements der Fig. 11 und 12 von unten.

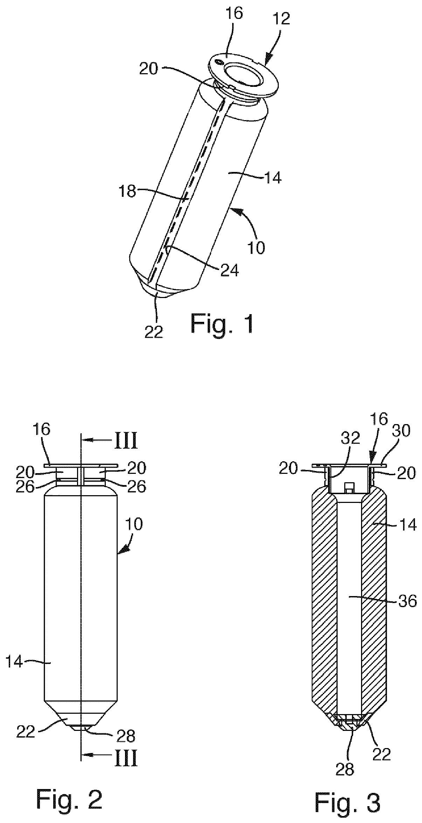

Fig. 1 zeigt eine erfindungsgemäße Ankerhülse 10, die einen Träger 12 aus Kunststoff aufweist. Der Träger 12 besteht aus belastbarem Kunststoff, beispielsweise Polyurethan oder Polypropylen, der mechanisch belastbar und nur in sehr geringem Maß flexibel ist. Mit anderen Worten besteht der Träger 12 aus einem Kunststoff, wie er beispielsweise auch für Kunststoffdübel verwendet wird.

Die Ankerhülse 10 weist darüber hinaus ein rohrartiges Element 14 aus einem grobporigen, offenzelligen oder offenporigen Schaumstoff auf. Der Schaumstoff ist beispielsweise ein Filterschaumstoff auf Basis von Polypropylen (PP), Polyamid (PA), Polyethylen (PET) oder Ähnlichem, wie er auch als Filtermaterial in der Aquaristik Verwendung findet. Auch ein offenzelliger bzw. offenporiger Polyetherschaum kann verwendet werden. In allen Fällen liegt eine Porosität des Schaumstoffs zwischen 15 Poren pro Inch (PPI, pores per inch) und 25 PPI und beträgt insbesondere 20 PPI.

Das rohrartige Element 14 ist an dem Träger 12 festgeklemmt. Im Rahmen der Erfindung kann das rohrartige Element auch an dem Träger festgeklebt, festgeschweißt oder in sonstiger Weise kraftschlüssig oder stoffschlüssig verbunden sein.

Der Träger 12 weist eine Eingangsbuchse 16 auf, die einen ringförmigen Eingangsflansch bildet. Der Träger 12 weist weiter zwei Verbindungsleisten 18 auf, von denen in Fig. 1 lediglich eine erkennbar ist. Die in Fig. 1 sichtbare Verbindungsleiste 18 verbindet eine Halbschale 20 mit einem Endstück 22, das auf der Außenseite und auf der in Fig. 1 nicht sichtbaren Innenseite kegelstumpfförmig ausgebildet ist. Das Endstück 22, die beiden Verbindungsleisten 18 sowie auch die beiden Halbschalen 20 sind aus einem einstückigen Kunststoffteil hergestellt. Die Eingangsbuchse 16 besteht ebenfalls aus einem einstückigen Kunststoffteil.

Das rohrförmige Element 14 weist parallel zu seiner Mittellängsachse zwei, sich von der Außenseite nach innen sich erstreckende Nuten 24 auf, wobei in Fig. 1 lediglich eine der Nuten erkennbar ist. Jede der Nuten 24 nimmt eine Verbindungsleiste 18 auf.

Die Halbschalen 20 weisen jeweils eine Nut oder Einkerbung 26 auf, siehe Fig. 2. Diese Einkerbung 26 dient zum Einlegen eines Drahts, der dann die beiden Halbschalen 20 gegen einen zylindrischen Abschnitt der Eingangsbuchse 16 vorspannt. Zwischen den Halbschalen 20 und einer Außenwand des zylindrischen Abschnitts der Eingangsbuchse 16 ist ein Abschnitt des rohrförmigen Elements 14 festgeklemmt, was nachfolgend noch erläutert wird. Ein in der Einkerbung 26 angeordneter Draht wird festgerödelt, um das rohrförmige Element 14 aus Schaumstoff festzuklemmen, indem die Halbschalen 20 nach innen, gegen die Eingangsbuchse 14 vorgespannt werden. Im Rahmen der Erfindung ist selbstverständlich eine andere Verbindung der beiden Halbschalen 20 möglich, beispielsweise mittels eines Federrings, eines ringförmigen Kragens an der Eingangsbuchse 16 oder auch mittels Verkleben oder Verschweißen.

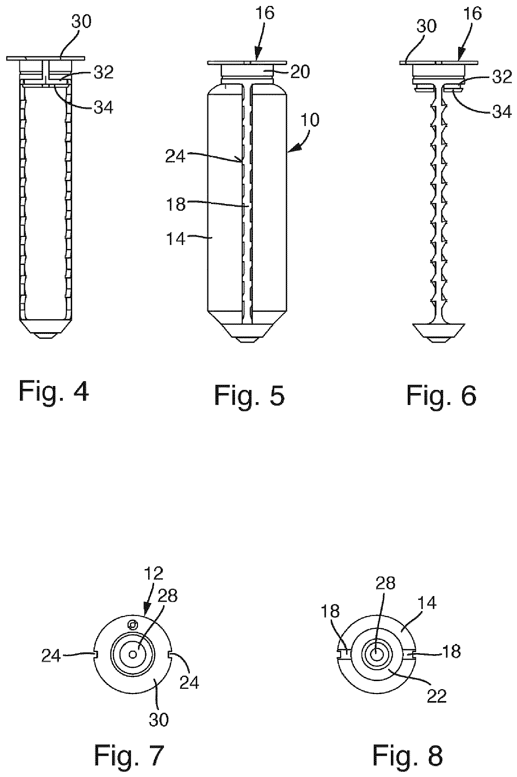

Fig. 2 lässt das kegelstumpfförmige Endstück 22 erkennen, das, wie ausgeführt wurde, einstückig mit den beiden Verbindungsleisten 18 und den beiden Halbschalen 20 ausgeführt ist, wobei die beiden Verbindungsleisten 18 in der Ansicht der Fig. 2 nicht erkennbar sind, siehe aber Fig. 4.

Fig. 5 zeigt eine gegenüber der Seitenansicht der Fig. 2 um 90° gedrehte Seitenansicht der Ankerhülse 10. In dieser Ansicht ist eine der Verbindungsleisten 18 und eine der Halbschalen 20 zu erkennen. Fig. 5 lässt auch erkennen, dass die Verbindungsleiste 18 in der Nut 24 des rohrförmigen Elements 14 aus Schaumstoff aufgenommen ist.

Fig. 2 und Fig. 5 lassen abschnittsweise einen Klemmniet 28 erkennen, der von innen her durch eine Öffnung im Endstück 22 gedrückt wird, dort einrastet und damit auch das rohrförmige Element 14 aus Schaumstoff am Endstück 22 festklemmt.

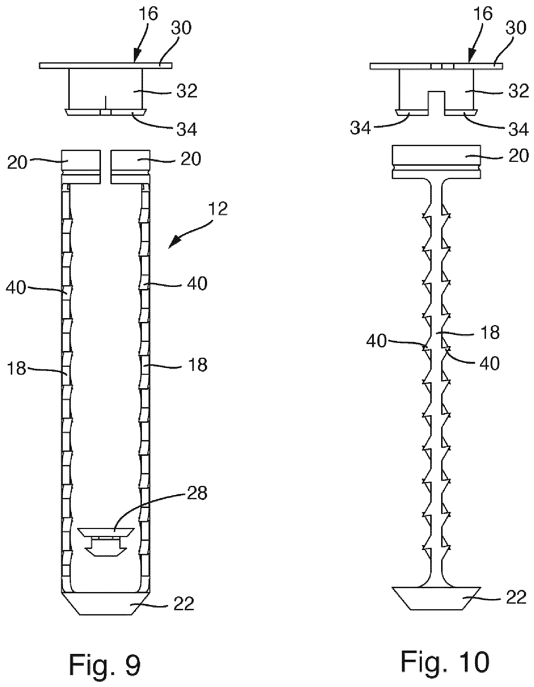

Fig. 3 zeigt eine Schnittansicht auf die Schnittebene III-III in Fig. 2. In dieser Schnittansicht der Fig. 3 sind die Verbindungsleisten 18 nicht zu erkennen, da sie senkrecht zur Schnittebene III-III angeordnet sind. Fig. 3 lässt zunächst die Ausbildung der Eingangsbuchse 16 mit einem ringförmigen Eingangsflansch 30 und einem zylindrischen Abschnitt 32 erkennen. Der zylindrische Abschnitt 32 ist, vgl. Fig. 4 und Fig. 6, an seinem unteren Ende mit sich nach außen erstreckenden Rastnasen 34 versehen. Dies ist auch gut in Fig. 9 und Fig. 10 zu erkennen.

Fig. 3 lässt erkennen, dass ein an den Eingangsflansch 30 angrenzender Abschnitt des rohrförmigen Elements 14 aus Schaumstoff zwischen den beiden Halbschalen 20 zusammengedrückt und gegen den zylindrischen Abschnitt 32 der Eingangsbuchse 16 geklemmt ist. Das rohrförmige Element 14 ist dadurch zuverlässig an den Halbschalen 20 sowie der Eingangsbuchse 16 festgeklemmt, da ja, wie ausgeführt wurde, die Halbschalen 20 radial nach innen vorgespannt werden, beispielsweise durch einen umlaufenden und festgerödelten Draht.

Das rohrförmige Element 14 ist darüber hinaus am Endstück 22 mittels des Klemmniets 28 festgeklemmt. Der Klemmniet 28 wird hierzu durch ein Sackloch 36 im rohrförmigen Element 14 bis zum Grund des Sacklochs hindurchgeschoben, dann durch den Boden des Sacklochs hindurchgedrückt, bis er in der Öffnung des Endstücks 22 einrastet, wie dies in Fig. 3 dargestellt ist. Da das rohrförmige Element 14 aus einem grobporigen, offenzelligen Schaumstoff besteht, der sehr flexibel ist, kann der Klemmniet 28 durch den Boden des Sacklochs im rohrförmigen Element 14 hindurchgedrückt und dann in der Öffnung im Endstück 22 verrastet und verankert werden. Mittels des Klemmniets 28 ist somit das rohrförmige Element 14 aus Schaumstoff auch zuverlässig am Endstück 22 festgeklemmt.

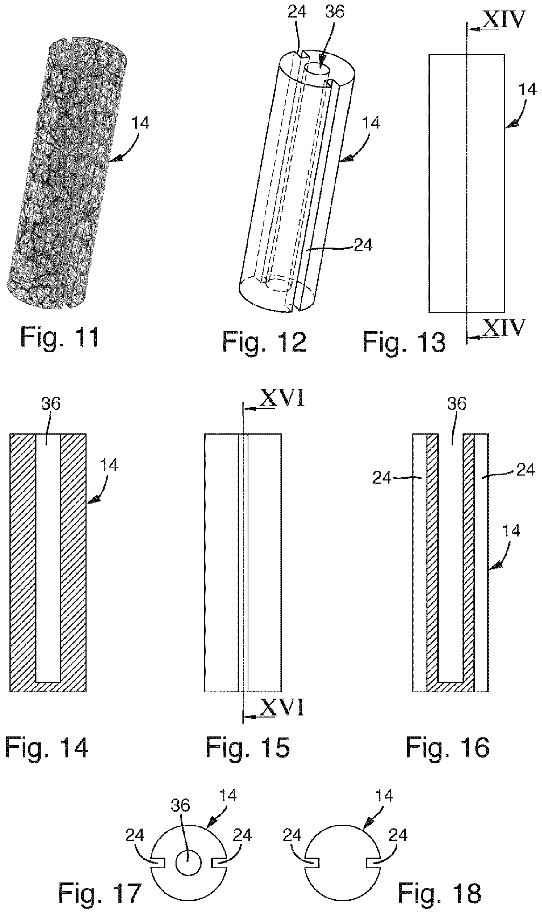

Die Fig. 11 bis 18 zeigen das rohrförmige Element 14 aus Schaumstoff vor dem Einsetzen in den Träger 12. Den Schnittansichten in Fig. 14 und Fig. 16 ist die Ausbildung des rohrförmigen Elements 14 mit dem mittigen Sackloch 36 deutlich zu entnehmen. In Fig. 16 verläuft die Schnittebene durch die beiden Nuten 18, die sich von der Außenfläche des rohrförmigen Elements 14 nach innen erstrecken und die, wie ausgeführt wurde, zum Aufnehmen jeweils einer Verbindungsleiste 18 des Trägers 12 vorgesehen sind.

In Fig. 11 wurde versucht, die grobporige, offenzellige Struktur des rohrförmigen Elements 14 aus Schaumstoff darzustellen.

Fig. 17 zeigt eine Ansicht des rohrförmigen Elements 14 von oben. Zu erkennen ist das Sackloch 36 sowie die beiden Nuten 24. Fig. 18 zeigt eine Ansicht des rohrförmigen Elements 14 von unten. Das Sackloch 36 ist in dieser Ansicht nicht zu erkennen, lediglich die beiden Nuten 24.

Fig. 7 zeigt eine Ansicht der Ankerhülse 12 der Fig. 1 von oben. In dieser Ansicht geht der Blick in das Sackloch 36 hinein und am Grund des Sacklochs ist der Klemmniet 28 zu erkennen, vgl. Fig. 3.

Fig. 8 zeigt eine Ansicht der Ankerhülse 10 von unten. Von dem Endstück 22 gehen die Verbindungsleisten 18 aus, die in den Nuten 24 des rohrförmigen Elements 14 angeordnet sind. Ein durch die Mittelöffnung des Endstücks 22 hindurchgedrückter Klemmabschnitt des Klemmniets 28 ist ebenfalls zu erkennen.

Um den Träger 12 und das rohrförmige Element 14 zu der Ankerhülse 10 zusammenzubauen, kann wie folgt vorgegangen werden. Bezug genommen wird dabei auf die Fig. 11 bis 18, die das rohrförmige Element 14 aus Schaumstoff vor dem Zusammenbau mit dem Träger 12 zeigen, sowie auf die Fig. 9 und 10, die den Träger 12 vor dem Zusammenbau zeigen. In Fig. 9 ist der Klemmniet 28 dargestellt, in Fig. 10 ist der Klemmniet 28 der Übersichtlichkeit halber weggelassen worden. Die zusammengebaute Ankerhülse ist, wie bereits ausgeführt wurde, in den Fig. 1 bis 3 sowie 7 und 8 dargestellt.

Zur Montage des rohrförmigen Elements 14 an dem Träger 12 wird das rohrförmige Element 14 zunächst zwischen die beiden Verbindungsleisten 18 gesteckt, bis das Ende des rohrförmigen Elements 14 mit geschlossenem Boden, siehe Fig. 18, an der Innenseite des kegelstumpfförmigen Endstücks 22 anliegt. Hierzu können die beiden Verbindungsleisten 18 ein Stück weit nach außen gebogen werden, um das rohrförmige Element 14 so zwischen die beiden Verbindungsleisten einzuschieben, dass die beiden Verbindungsleisten 18 in den Nuten 24 des rohrförmigen Elements 14 angeordnet sind, siehe beispielsweise Fig. 1 und Fig. 5. Die beiden Halbschalen 20 liegen dann an einer Außenseite des rohrförmigen Elements 14 auf.

Fig. 9 und Fig. 10 lassen erkennen, dass beide Verbindungsleisten 18 mit Sägezähnen 40 versehen sind. Diese Sägezähne 40 greifen in das Schaumstoffmaterial des rohrförmigen Elements 14 ein und sichern das rohrförmige Element 14 gegen eine Verschiebung parallel zu einer Mittellängsachse der Ankerhülse 10, vgl. Fig. 1. Die Sägezähne 40 der beiden Verbindungsleisten 18 erstrecken sich dabei in Umfangsrichtung des rohrförmigen Elements 14, so dass die Sägezähne 40 also in die Seitenwände der Nuten 24 in dem rohrförmigen Element 24 eingreifen.

Fig. 10 lässt erkennen, dass zu beiden Seiten der Verbindungsleisten 18 Sägezähne 40 über annähernd die gesamte Länge der Verbindungsleiste 18 angeordnet sind. Auf der einen Seite, in Fig. 10 links, ist die steile Flanke der Sägezähne 40 dem Endstück 22 zugewandt, auf der gegenüberliegenden Seite, in Fig. 10 rechts, ist die steile Flanke der Sägezähne der Halbschale 20 zugewandt. Mittels der Sägezähne 40 kann somit eine Verschiebung des rohrförmigen Elements 14 relativ zum Träger 12 in Richtung auf das Endstück 22 sowie auch in der Gegenrichtung, also in Richtung auf die Halbschale 20, verhindert werden.

Nach dem Einsetzen des rohrförmigen Elements 14 zwischen die beiden Verbindungsleisten 18 wird der Klemmniet 28 in das Sackloch 36 des rohrförmigen Elements 14 eingeführt, vgl. auch Fig. 3, und dann durch den Boden des Sacklochs hindurch in die Mittelöffnung des Endstücks 22 eingedrückt. Der Klemmniet wird hierbei mittels eines geeigneten stabförmigen Werkzeugs geführt, das in eine in Fig. 3 erkennbare Sacklochbohrung im Klemmniet 28 eingreift. Der Klemmniet 28 wird so weit gegen das Endstück 22 verschoben, bis Rastnasen an dem in Fig. 9 und Fig. 3 unteren Ende des Klemmniets 28 über eine Begrenzungskante der Mittelöffnung im Endstück 22 schnappen. Der Boden des rohrförmigen Elements 14 aus Schaumstoff wird dabei stark komprimiert und gleichzeitig am Endstück 22 festgeklemmt.

Nachfolgend wird die Eingangsbuchse 16 so weit in das Sackloch 36 des rohrförmigen Elements 14 eingedrückt bzw. eingeschoben, bis eine Oberseite des rohrförmigen Elements 14 an einer Unterseite des Ringflansches 30 der Eingangsbuchse 16 anliegt. Die Halbschalen 20 liegen dann ebenfalls an einer Unterseite des Ringflansches 30 an oder sind in sehr geringem Abstand von der Unterseite des Ringflansches 30 angeordnet. Nachfolgend werden, wie bereits erörtert wurde, die beiden Halbschalen 20 nach innen gedrückt und in dieser nach innen gedrückten Position fixiert, beispielsweise mittels eines die beiden Halbschalen 20 umgebenden Drahts oder Federrings. Die Rastnasen 34 an der Eingangsbuchse 16 liegen dann, siehe Fig. 4 und Fig. 6, unterhalb eines Rands der Halbschalen 20, der dem Endstück 22 zugewandt ist. Die Eingangsbuchse ist damit an den Halbschalen 20 fixiert und auch das rohrförmige Element 14 liegt zwischen einer Außenwand des zylindrischen Abschnitts 32 der Eingangsbuchse 16 und jeweiligen Innenwänden der Halbschalen 20 und ist dadurch sicher am Träger 12 festgeklemmt. Dadurch ergibt sich die in den Fig. 1, 2, 3 und 5 erkennbare Form des rohrförmigen Elements 14, das im Bereich des Endstücks 22 und im Bereich der Eingangsbuchse 16 stark zusammengedrückt und festgeklemmt ist.

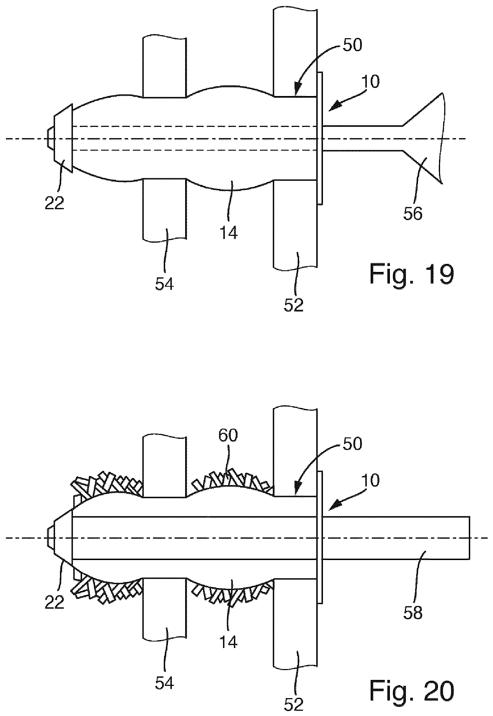

Um mittels der Ankerhülse 10 ein Ankerelement in einer Öffnung eines Gegenstands zu befestigen, wird die Ankerhülse 10, siehe Fig. 19, in eine Öffnung in einem Gegenstand eingeschoben, bis eine Unterseite des Ringflansches 30 der Eingangsbuchse 16 an einer Oberfläche des Gegenstands anliegt. Die Öffnung ist im Falle der Fig. 19 als Bohrloch in einem Hohllochziegel ausgeführt. Fig. 19 lässt erkennen, dass ein Innendurchmesser einer Bohrung 50 in dem Hohllochziegel kleiner ist als ein Außendurchmesser des rohrförmigen Elements 14 der Ankerhülse 10. Das rohrförmige Element 14 wird somit im Bereich der Stege 52, 54 des Hohllochziegels komprimiert, außerhalb der Stege 52, 54 versucht das rohrförmige Element 14 aber wieder seine ursprüngliche Form einzunehmen und ist daher nach außen gewölbt und weist daher zwischen oder neben den Stegen 52, 54 einen größeren Außendurchmesser auf als der Durchmesser der Bohrung 50 in den Stegen 52, 54. Um die Ankerhülse 10 überhaupt in die Öffnung 50 einschieben zu können, wird eine Injektionsmörtelspritze 56, die in Fig. 19 lediglich schematisch und abschnittsweise dargestellt ist, bis zum Grund des Sacklochs in dem rohrförmigen Element 14 geschoben, bis also das freie Ende der Injektionsmörtelspritze 56 an der Innenseite des Endstücks 22 anschlägt. Die Ankerhülse 10 kann dadurch problemlos in die Öffnung, auch wenn sich diese durch mehrere Stege hindurcherstreckt oder eine Bohrungswandung mit ausgebrochenen Stellen hat, hindurchgeschoben bzw. eingeschoben werden, bis die in Fig. 19 dargestellte Lage erreicht ist.

Ausgehend von der in Fig. 19 dargestellten Situation wird begonnen, mittels der Injektionsmörtelspritze 56 Injektionsmörtel in das Sackloch des rohrförmigen Elements 14 einzubringen. Dies erfolgt in mehreren Hüben, typischerweise mittels sechs Hüben, wobei nach jedem Hub die Injektionsmörtelspritze 56 ein Stück weit aus dem Sackloch des rohrförmigen Elements 14 herausgezogen wird. Dies wird als Auffüllen der Ankerhülse 10 vom Grund auf bezeichnet.

Alternativ kann nach dem Einschieben der Ankerhülse 10 ausgehend von der in Fig. 19 dargestellten Situation die Injektionsmörtelspritze zurückgezogen werden und das Einfüllen des Injektionsmörtels kann vom Beginn des Sacklochs, also etwa auf Höhe des Stegs 52, erfolgen.

Bereits beim Auffüllen des Sacklochs 36 des rohrförmigen Elements 14 mit Injektionsmörtel dringt der Injektionsmörtel in die offenen Poren des rohrförmigen Elements 14 aus Schaumstoff ein und füllt diese wenigstens teilweise aus. Es ist bereits in Fig. 19 zu erkennen, dass bereits durch einfaches Auffüllen des Schaumstoffs mit dem Injektionsmörtel eine sogenannte Plombenbildung erfolgt. Hierbei genügt es, wenn lediglich die Poren des rohrförmigen Elements 14 mit Injektionsmörtel aufgefüllt werden. Denn das rohrförmige Element 14 ist zwischen den Stegen 52, 54 und neben dem Steg 54 bereits nach außen ausgebeult und bildet bereits dadurch einen Formschluss an den Stegen 52, 54. Dieser Formschluss verhindert im ausgehärteten Zustand des Injektionsmörtels, dass die Ankerhülse 10 mit einem darin angeordneten Ankerelement aus dem Gegenstand oder aus der Öffnung 50 herausgezogen werden kann.

Üblicherweise tritt der Injektionsmörtel aber spätestens beim Einschieben eines Ankerelements in die Ankerhülse 10 aus der Außenseite des rohrförmigen Elements 14 aus und verbessert dadurch einen Formschluss sowie auch einen Stoffschluss mit dem Gegenstand, im dargestellten Fall also mit den Stegen 52, 54 eines Hohllochziegels.

Ausgehend vom Zustand der Fig. 19 wird, wie beschrieben, die Ankerhülse mit Injektionsmörtel befüllt, die Injektionsmörtelspritze 56 aus der Ankerhülse 10 herausgezogen und ein Ankerelement, typischerweise eine Ankerstange 58, siehe Fig. 20, wird in die Ankerhülse 10 eingeschoben, noch bevor der Injektionsmörtel ausgehärtet ist.

Als Injektionsmörtel kann radikalisch härtender Injektionsmörtel verwendet werden oder beispielsweise auch ein Epoxid-Harz. Entscheidend ist, dass der Injektionsmörtel im nicht ausgehärteten Zustand pastös oder dickflüssig ist, so dass er in die Poren des rohrförmigen Elements 14 aus Schaumstoff eindringen kann und so dass er beim Einschieben der Ankerstange 58 aus dem Sackloch 36 des rohrförmigen Elements 14 verdrängt werden kann. Fig. 20 stellt eine schematische Schnittansicht der Ankerhülse 10 dar. Es ist zu erkennen, dass die Ankerstange 58 bis an die Innenseite des Endstücks 22 der Ankerhülse 10 in diese eingeschoben wurde. Das Endstück 22 bietet dabei einen zuverlässigen Anschlag. Es ist weiter zu erkennen, dass der Außendurchmesser der Ankerstange 58 größer oder gleich ist wie der Innendurchmesser des Sacklochs 36. Es ist dadurch sichergestellt, dass der Außenumfang der Ankerstange 58 an dem Innenumfang des Sacklochs 36 des rohrförmigen Elements 14 aus Schaumstoff anliegt. Um einen Stoffschluss und Formschluss mit dem Injektionsmörtel zu bilden, muss infolgedessen der Injektionsmörtel nicht zurückfließen, sondern wird durch die Flexibilität und Elastizität des Schaumstoffs des rohrförmigen Elements 14 automatisch in Anlage mit dem Außenumfang der Ankerstange 58 gedrückt.

In Fig. 20 ist schematisch eingezeichnet, wie der Injektionsmörtel 60 aus dem Außenumfang des rohrförmigen Elements 14 austritt. Es wurde versucht darzustellen, dass der Injektionsmörtel in nicht ausgerichteten Fäden oder Strängen austritt. Dies deshalb, da die Poren in dem rohrförmigen Element 14 nicht regelmäßig angeordnet sind. Die einzelnen Stränge des Injektionsmörtels 60, die aus dem rohrförmigen Element 14 austreten, verbinden sich infolgedessen untereinander. Der sogenannte Spaghettieffekt bei konventionellen Siebhülsen, bei denen die Stränge geordnet nebeneinanderliegen und sich nicht miteinander verbinden, kann bei der erfindungsgemäßen Ankerhülse 10 somit nicht auftreten. Vielmehr verkeilen und verschränken sich die austretenden Stränge des Injektionsmörtels 60 und verstärken dadurch den Formschluss der Ankerhülse 10 an den Stegen 52, 54 des Hohlziegels.

Die in den Fig. 19 und 20 dargestellte Anordnung mit einem Ankerelement, also der Ankerstange 58 und der erfindungsgemäßen Ankerhülse 10 sowie der Öffnung 50 in einem Gegenstand, nämlich einem Hohlziegel, sorgt infolgedessen für hohe Verankerungskräfte und einen sicheren Formschluss der Ankerhülse 10 und des Injektionsmörtels 60 verbinden sich miteinander sowie der Ankerstange 58 in dem Gegenstand, also dem Hohlziegel.

Ein weiterer Formschluss zwischen der Ankerhülse 10 und den Stegen 52, 54 tritt selbstverständlich auch im Bereich der Stege 52, 54 auf. Unebenheiten in der Innenwand der Öffnung 50 werden mit Injektionsmörtel ausgefüllt. Darüber hinaus kann im Bereich der Stege 52, 54 auch ein Stoffschluss zwischen dem Material der Stege 52, 54 und dem Injektionsmörtel 60 erzielt werden.

## Patentansprüche

1. Ankerhülse (10) für ein Injektionssystem zum Befestigen eines Ankerelements in einer Öffnung (50) in einem Gegenstand, insbesondere in einem Bohrloch in einem Mauerwerk, wobei die Ankerhülse (10) wenigstens abschnittsweise aus flexiblem, durchlässigem offenzelligen Schaumstoff besteht, **dadurch gekennzeichnet, dass** ein Träger (12) mit einem Endstück (22) und einem Eingangsflansch (30) vorgesehen ist, wobei der Schaumstoff an dem Träger (12) befestigt ist, dass das Endstück (22) und der Eingangsflansch (30) mittels wenigstens einer Verbindungsleiste (18) verbunden sind und dass die wenigstens eine Verbindungsleiste (18) mit Verankerungselementen, insbesondere Sägezähne (40) und/oder Haken, zum Angreifen an dem Schaumstoff versehen ist

2. Ankerhülse nach Anspruch 1, **dadurch gekennzeichnet, dass** die Ankerhülse (10) ein rohrartiges Element (14) aus dem Schaumstoff aufweist, wobei insbesondere das rohrartige Element (14) aus Schaumstoff ein Sackloch ausbildet.

3. Ankerhülse nach Anspruch 1 oder 2, **dadurch gekennzeichnet, dass** sich die Sägezähne (40) und/oder Haken von der Verbindungsleiste (18) weg in Umfangsrichtung des rohrartigen Elements (14) aus Schaumstoff erstrecken und/oder dass die Sägezähne (40) teilweise in eine Richtung zum Endstück (22) und teilweise in eine Richtung vom Endstück (22) weg ausgerichtet sind.

4. Ankerhülse (10) nach wenigstens einem der Ansprüche 1 bis 3, **dadurch gekennzeichnet, dass** das rohrartige Element (14) aus Schaumstoff mit wenigstens einer in Längsrichtung verlaufenden Nut (24) versehen ist und dass die Verbindungsleiste (18) in der Nut (24) angeordnet ist.

5. Ankerhülse (10) nach Anspruch 4, **dadurch gekennzeichnet, dass** sich die Nut (24) von einer Außenseite des rohrartigen Elements nach innen erstreckt.

6. Ankerhülse (10) nach wenigstens einem der vorstehenden Ansprüche, **dadurch gekennzeichnet, dass** ein Träger (12) mit einem Endstück (22) und einem Eingangsflansch (30) vorgesehen ist, wobei der Schaumstoff mit dem Endstück (22) und/oder mit dem Eingangsflansch (30) verbunden ist, insbesondere an dem Endstück (22) und an dem Eingangsflansch (30) festgeklemmt ist, wobei insbesondere das Endstück (22) mit einer Durchgangsöffnung versehen ist und der Schaumstoff mittels eines Klemmniets (28), der in die Durchgangsöffnung eingeschoben ist, an dem Endstück (22) festgeklemmt ist.

7. Ankerhülse nach Anspruch 6, **dadurch gekennzeichnet, dass** die wenigstens eine Verbindungsleiste an ihrem, dem Endstück (22) gegenüberliegenden Ende mit einer Halteschale versehen ist, und dass der Eingangsflansch (30) mittels einer Eingangsbuchse (16) gebildet ist, wobei der Schaumstoff zwischen der Halteschale (20) und der Eingangsbuchse (16) festgeklemmt ist.

8. Ankerhülse nach Anspruch 6 oder 7, **dadurch gekennzeichnet, dass** das Endstück (22) auf seiner, dem Eingangsflansch (30) zugewandten Seite mit einem kegelstumpfförmigen Führungsabschnitt versehen ist, der sich in Richtung von dem Eingangsflansch (30) weg verjüngt.

9. Anordnung mit einem Ankerelement und einer Ankerhülse (10) nach wenigstens einem der vorstehenden Ansprüche, **dadurch gekennzeichnet, dass** die Ankerhülse (10) ein rohrartiges Element aus dem Schaumstoff aufweist und dass das Ankerelement einen Verankerungsabschnitt aufweist, der zum Einschieben in das rohrartige Element (14) ausgebildet ist, wobei ein Innendurchmesser des rohrartigen Elements (14) wenigstens abschnittsweise kleiner oder gleich dem Außendurchmesser des Ankerelements im Verankerungsabschnitt ist, wobei insbesondere ein Außendurchmesser des rohrartigen Elements (14) wenigstens abschnittsweise größer ist als der Innendurchmesser einer Öffnung (50), die zum Einführen der Ankerhülse (10) vorgesehen ist und wobei insbesondere das Ankerelement so weit in die Ankerhülse (10) eingeschoben ist, dass ein Ende des Ankerelements an einer Innenseite eines Endstücks (22) der Ankerhülse (10) anliegt.

10. Anordnung mit einer Ankerhülse nach wenigstens einem der Ansprüche 1 bis 8, wobei die Ankerhülse (10) ein rohrartiges Element (14) aus Schaumstoff aufweist, mit einem Ankerelement, mit einer Öffnung (50) in einem Gegenstand, insbesondere einem Bohrloch in einer Gebäudewand, und mit Injektionsmörtel, **dadurch gekennzeichnet, dass** die Ankerhülse (10) wenigstens abschnittsweise in die Öffnung (50) eingeschoben ist, dass der Injektionsmörtel die Poren des Schaumstoffs wenigstens teilweise gefüllt hat, dass das Ankerelement in die Ankerhülse (10) abschnittsweise eingeschoben ist, dass der Schaumstoff gegenüber einer Ausgangsposition vor dem Einfüllen von Injektionsmörtel in die Ankerhülse (10) und vor dem Einschieben des Ankerelements in die Ankerhülse (10) wenigstens abschnittsweise radial nach außen verdrängt ist und dass das Ankerelement wenigstens abschnittsweise an einer Innenseite des rohrartigen Elements (14) anliegt, dessen Poren zumindest teilweise mit dem Injektionsmörtel ausgefüllt sind.

11. Anordnung nach Anspruch 10, **dadurch gekennzeichnet, dass** ein Abschnitt des rohrartigen Elements (14) aus Schaumstoff, dessen Poren wenigstens teilweise mit dem Injektionsmörtel gefüllt sind, unmittelbar hinter einem Eingangssteg (52) der Öffnung (50) eine torusförmige Struktur ausbildet, deren Außendurchmesser größer ist als der Innendurchmesser der Öffnung (50).

12. Anordnung nach Anspruch 10, **dadurch gekennzeichnet, dass** ein Abschnitt des rohrartigen Elements (14) aus Schaumstoff, dessen Poren wenigstens teilweise mit dem Injektionsmörtel gefüllt sind, zwischen der Öffnung (50) und einer weiteren Öffnung in einem Innensteg (54) des Gegenstandes eine zylinderartige oder torusförmige Struktur ausbildet, deren Außendurchmesser größer ist als der Innendurchmesser der Öffnung (50).

13. Verfahren zum Befestigen eines Ankerelements in einer Öffnung (50) eines Gegenstandes mittels einer Ankerhülse nach wenigstens einem der Ansprüche 1 bis 8, **gekennzeichnet durch** wenigstens abschnittsweises Einschieben der Ankerhülse (10) in die Öffnung (50), Einfüllen von Injektionsmörtel in die Ankerhülse (10) und abschnittsweises Einschieben des Ankerelements in die Ankerhülse (10), insbesondere **gekennzeichnet durch** Aufsetzen der Ankerhülse (10) auf eine Injektionsmörtelspritze (56), insbesondere bis ein freies Ende der Injektionsmörtelspritze (56) an einem Endstück (22) der Ankerhülse (10) anschlägt, und Einschieben der Ankerhülse (10) zusammen mit der Injektionsmörtelspritze in die Öffnung.

14. Verfahren nach Anspruch 13, **gekennzeichnet durch** Einfüllen des Injektionsmörtels in die Ankerhülse (10) beginnend vom Grund der Ankerhülse (10) oder **gekennzeichnet durch** Einfüllen des Injektionsmörtels in die Ankerhülse (10) beginnend am offenen Ende oder kurz hinter dem offenen Ende der Ankerhülse (10), insbesondere beginnend in einem ersten Drittel der Länge der Ankerhülse (10).

## Claims

1. Anchor sleeve (10) for an injection system for securing an anchor element in an opening (50) in an article, especially in a bore hole in masonry, where the anchor sleeve (10) consists at least in sections of flexible permeable open-cell foam, **characterized in that** a carrier (12) with an end piece (22) and an entry flange (30) is provided, wherein the foam is secured to the carrier (12), **in that** the end piece (22) and the entry flange (30) are joined by means of at least one connecting strip (18), and **in that** the at least one connecting strip (18) is provided with anchoring elements, especially sawteeth (40) and/or hooks, for engaging with the foam.

2. Anchor sleeve according to Claim 1, **characterized in that** the anchor sleeve (10) has a tubular element (14) made of the foam, wherein the tube-like element (14) made of foam in particular forms a blind hole.

3. Anchor sleeve according to Claim 1 or 2, **characterized in that** the sawteeth (40) and/or hooks extend away from the connecting strip (18) in circumferential direction of the tube-like element (14) made of foam, and/or **in that** the sawteeth (40) are aligned partly in a direction toward the end piece (22) and partly in a direction away from the end piece (22).

4. Anchor sleeve (10) according to at least one of Claims 1 to 3, **characterized in that** the tube-like element (14) made of foam is provided with at least one groove (24) that runs in longitudinal direction and **in that** the connecting strip (18) is disposed in the groove (24).

5. Anchor sleeve (10) according to Claim 4, **characterized in that** the groove (24) extends from an outer face of the tube-like element inward.

6. Anchor sleeve (10) according to at least one of the preceding claims, **characterized in that** a carrier (12) with an end piece (22) and an entry flange (30) is provided, wherein the foam is connected to the end piece (22) and/or to the entry flange (30), especially is clamped to the end piece (22) and to the entry flange (30), wherein the end piece (22) is in particular provided with a passage opening and the foam is clamped to the end piece (22) by means of a clamping rivet (28) inserted into the passage opening.

7. Anchor sleeve according to Claim 6, **characterized in that** the at least one connecting strip, at its end opposite the end piece (22), is provided with a holding shell, and **in that** the entry flange (30) is formed by means of an entry bushing (16), where the foam is clamped between the holding shell (20) and the entry bushing (16).

8. Anchor sleeve according to Claim 6 or 7, **characterized in that** the end piece (22), on its side facing the entry flange (30), has been provided with a frustoconical guide section that tapers in the direction away from the entry flange (30).

9. Arrangement having an anchor element and an anchor sleeve (10) according to at least one of the preceding claims, **characterized in that** the anchor sleeve (10) has a tube-like element made of the foam and **in that** the anchor element has an anchoring section designed for insertion into the tube-like element (14), wherein an internal diameter of the tube-like element (14), at least in sections, is less than or equal to the external diameter of the anchor element in the anchoring section, wherein an external diameter of the tube-like element (14), at least in sections, is in particular greater than the internal diameter of an opening (50) intended for introduction of the anchor sleeve (10), and wherein the anchor element has in particular been inserted into the anchor sleeve (10) to such an extent that one end of the anchor element adjoins an inner face of an end piece (22) of the anchor sleeve (10).

10. Arrangement having an anchor sleeve according to at least one of Claims 1 to 8, wherein the anchor sleeve (10) has a tube-like element (14) made of foam, having an anchor element, having an opening (50) in an article, especially a bore hole in a building wall, and having injection mortar, **characterized in that** the anchor sleeve (10) has been inserted at least in sections into the opening (50), **in that** the injection mortar has at least partly filled the pores in the foam, **in that** the anchor element has been inserted in sections into the anchor sleeve (10), **in that** the foam has been displaced radially outward at least in sections with respect to a starting position prior to the introduction of injection mortar into the anchor sleeve (10) and prior to insertion of the anchor element into the anchor sleeve (10), and **in that** the anchor element at least in sections adjoins an inner face of the tube-like element (14), the pores of which have been at least partly filled with the injection mortar.

11. Arrangement according to Claim 10, **characterized in that** a section of the tube-like element (14) made of foam, the pores of which have been at least partly filled with the injection mortar, immediately beyond an entry element (52) of the opening (50), forms a toroidal structure, the external diameter of which is greater than the internal diameter of the opening (50).

12. Arrangement according to Claim 10, **characterized in that** a section of the tube-like element (14) made of foam, the pores of which have been at least partly filled with the injection mortar, between the opening (50) and a further opening in an inner element (54) of the article, forms a cylindrical or toroidal structure, the external diameter of which is greater than the internal diameter of the opening (50).

13. Method of securing an anchor element in an opening (50) of an article by means of an anchor sleeve according to at least one of Claims 1 to 8, **characterized by** insertion of at least sections of the anchor sleeve (10) into the opening (50), introduction of injection mortar into the anchor sleeve (10) and insertion of sections of the anchor element into the anchor sleeve (10), in particular **characterized by** placing of the anchor sleeve (10) onto an injection mortar injector (56), especially until a free end of the injection mortar injector (56) hits an end piece (22) of the anchor sleeve (10), and inserting the anchor sleeve (10) into the opening together with the injection mortar injector.

14. Method according to Claim 13, **characterized by** insertion of the injection mortar into the anchor sleeve (10) beginning from the base of the anchor sleeve (10), or **characterized by** insertion of the injection mortar into the anchor sleeve (10) beginning at the open end or just beyond the open end of the anchor sleeve (10), especially beginning in a first third of the length of the anchor sleeve (10).

## Revendications

1. Manchon d'ancrage (10) pour un système d'injection destiné à fixer un élément d'ancrage dans une ouverture (50) dans un objet, en particulier dans un trou de forage dans une maçonnerie, le manchon d'ancrage (10) étant constitué au moins par sections de mousse souple, perméable, à pores ouverts, **caractérisé en ce qu'**un support (12) comportant une pièce d'extrémité (22) et une bride d'entrée (30) est prévu, la mousse étant fixée au support (12), **en ce que** la pièce d'extrémité (22) et la bride d'entrée (30) sont reliées au moyen d'au moins une barre de liaison (18) et **en ce que** ladite au moins une barre de liaison (18) est pourvue d'éléments d'ancrage, en particulier de dentures (40) et/ou de crochets pour la mise en prise avec la mousse.

2. Manchon d'ancrage selon la revendication 1, **caractérisé en ce que** le manchon d'ancrage (10) présente un élément tubulaire (14) constitué par la mousse, l'élément tubulaire (14) en mousse formant en particulier un trou borgne.

3. Manchon d'ancrage selon la revendication 1 ou 2, **caractérisé en ce que** les dentures (40) et/ou les crochets s'étendent à partir de la barre de liaison (18) en s'écartant dans la direction périphérique de l'élément tubulaire (14) en mousse et/ou **en ce que** les dentures (40) sont orientées en partie dans un sens vers la pièce d'extrémité (22) et en partie dans un sens à l'opposé de la pièce d'extrémité (22).

4. Manchon d'ancrage (10) selon l'une des revendications 1 à 3, **caractérisé en ce que** l'élément tubulaire (14) en mousse est pourvu d'au moins une rainure (24) s'étendant dans la direction longitudinale et **en ce que** la barre de liaison (18) est agencée dans la rainure (24).

5. Manchon d'ancrage (10) selon la revendication 4, **caractérisé en ce que** la rainure (24) s'étend à partir d'un côté externe de l'élément tubulaire vers l'intérieur.

6. Manchon d'ancrage (10) selon au moins l'une des revendications précédentes, **caractérisé en ce qu'**un support (12) comportant une pièce d'extrémité (22) et une bride d'entrée (30) est prévu, la mousse étant reliée à la pièce d'extrémité (22) et/ou à la bride d'entrée (30), en particulier calée sur la pièce d'extrémité (22) et sur la bride d'entrée (30), la pièce d'extrémité (22) étant en particulier pourvue d'une ouverture de passage et la mousse étant en particulier calée sur la pièce d'extrémité (22) au moyen d'un rivet à serrage (28) qui est inséré dans l'ouverture de passage.

7. Manchon d'ancrage selon la revendication 6, **caractérisé en ce que** ladite au moins une barre de liaison est pourvue, en son extrémité opposée à la pièce d'extrémité (22), d'une plaque de retenue et **en ce que** la bride d'entrée (30) est formée au moyen d'une douille d'entrée (16), la mousse étant calée entre la plaque de retenue (20) et la douille d'entrée (16).

8. Manchon d'ancrage selon la revendication 6 ou 7, **caractérisé en ce que** la pièce d'extrémité (22) est pourvue, sur son côté orienté vers la bride d'entrée (30), d'une section de guidage en forme de cône tronqué qui se rétrécit dans un sens opposé à la bride d'entrée (30).

9. Système comportant un élément d'ancrage et un manchon d'ancrage (10) selon au moins l'une des revendications précédentes, **caractérisé en ce que** le manchon d'ancrage (10) présente un élément tubulaire constitué par ladite mousse et **en ce que** l'élément d'ancrage présente une section d'ancrage qui est conçue pour l'insertion dans l'élément tubulaire (14), un diamètre interne de l'élément tubulaire (14) étant inférieur ou égal, au moins par sections, au diamètre externe de l'élément d'ancrage dans la section d'ancrage, un diamètre externe de l'élément tubulaire (14) étant en particulier, au moins par sections, supérieur au diamètre interne d'une ouverture (50), qui est prévue pour l'introduction du manchon d'ancrage (10), et l'élément d'ancrage étant en particulier inséré dans le manchon d'ancrage (10) jusqu'à ce qu'une extrémité de l'élément d'ancrage se place contre un côté interne d'une pièce d'extrémité (22) du manchon d'ancrage (10).

10. Système comportant un manchon d'ancrage selon au moins l'une des revendications 1 à 8, le manchon d'ancrage (10) présentant un élément tubulaire (14) en mousse, comportant un élément d'ancrage, comportant une ouverture (50) dans un objet, en particulier un trou de forage dans un mur de bâtiment, et comportant du mortier d'injection, **caractérisé en ce que** le manchon d'ancrage (10) est inséré au moins par sections dans l'ouverture (50), **en ce que** le mortier d'injection a rempli au moins partiellement les pores de la mousse, **en ce que** l'élément d'ancrage est inséré par sections dans le manchon d'ancrage (10), **en ce que** la mousse est repoussée, au moins par sections, radialement vers l'extérieur par rapport à une position de départ avant le remplissage du mortier d'injection dans le manchon d'ancrage (10) et avant l'insertion de l'élément d'ancrage dans le manchon d'ancrage (10) et **en ce que** l'élément d'ancrage se place au moins par sections contre un côté interne de l'élément tubulaire (14) dont les pores sont remplis au moins partiellement par le mortier d'injection.

11. Système selon la revendication 10, **caractérisé en ce qu'**une section de l'élément tubulaire (14) en mousse, dont les pores sont au moins partiellement remplis par le mortier d'injection, forme une structure torique, dont le diamètre externe est supérieur au diamètre interne de l'ouverture (50), directement derrière un méplat d'entrée (52) de l'ouverture (50).

12. Système selon la revendication 10, **caractérisé en ce qu'**une section de l'élément tubulaire (14) en mousse, dont les pores sont au moins partiellement remplis par le mortier d'injection, forme une structure cylindrique ou torique, dont le diamètre externe est supérieur au diamètre interne de l'ouverture (50), entre l'ouverture (50) et une autre ouverture dans un méplat interne (54)s de l'objet.

13. Procédé de fixation d'un élément d'ancrage dans une ouverture (50) d'un objet au moyen d'un manchon d'ancrage selon au moins l'une des revendications 1 à 8, **caractérisé par** l'insertion, au moins par sections, du manchon d'ancrage (10) dans l'ouverture (50), le remplissage de mortier d'injection dans le manchon d'ancrage (10) et l'insertion, par sections, de l'élément d'ancrage dans le manchon d'ancrage (10), en particulier **caractérisé par** la pose du manchon d'ancrage (10) sur une seringue (56) de mortier d'injection, en particulier jusqu'à ce qu'une extrémité libre de la seringue (56) de mortier d'injection bute contre une pièce d'extrémité (22) du manchon d'ancrage (10), et insertion du manchon d'ancrage (10) conjointement avec la seringue de mortier d'injection dans l'ouverture.

14. Procédé selon la revendication 13, **caractérisé par** le remplissage du mortier d'injection dans le manchon d'ancrage (10) commençant à partir du fond du manchon d'ancrage (10) ou **caractérisé par** le remplissage du mortier d'injection dans le manchon d'ancrage (10) commençant à partir de l'extrémité ouverte ou peu derrière l'extrémité ouverte du manchon d'ancrage (10), en particulier commençant dans un premier tiers de la longueur du manchon d'ancrage (10).
